Europäisches Patentamt

European Patent Office

Office européen des brevets

(19)

(11) Publication number: **0 102 415**
**A1**

(12) # EUROPEAN PATENT APPLICATION

(21) Application number: **82304371.6**

(22) Date of filing: **19.08.82**

(51) Int. Cl.³: **B 65 G 47/10**

(43) Date of publication of application:
14.03.84 Bulletin 84/11

(84) Designated Contracting States:
DE FR GB

(71) Applicant: NIPPON FILING CO., LTD.
1-6, Surugadai, Kanda
Chiyoda-ku Tokyo(JP)

(72) Inventor: Tajima, Empei
4-14-21, Tokiwadaira
Matsudo-shi Chiba-ken(JP)

(72) Inventor: Yoshie, Jinichi
1455-11, Sendabori
Matsudo-shi Chiba-ken(JP)

(74) Representative: Sunderland, James Harry et al,
HASELTINE LAKE & CO Hazlitt House 28 Southampton
Buildings Chancery Lane
London WC2A 1AT(GB)

(54) Picking apparatus for distribution system.

(57) A picking apparatus for a distribution system has a plurality of shelving units (111, 112, . . . ) for storing articles of various types to be picked up, each shelving unit (111, 112, . . . ) having a plurality of compartments for storing the articles of one type, each compartment having a digital indicator (141, 142, . . . ) and reset push button switch (151, 152, . . . ). Further, a data indication controller (21) for storing the article data corresponding to an order list in combination with the respective data of unit number, location number and quantity data inputted from the main control system (20) such as a computer, is provided. Indication control circuits (221, 222, . . . ) are provided for the respective shelving units (111, 112, . . . ) and the output indication data corresponding to the article data from the data indication control circuit (21) are supplied in parallel to the indication control circuits (221, 222, . . . ) through one bus line (24). The indication control circuit (221, 222, . . . ) selectively identifies the article data corresponding to the self shelving unit, drives and indicates the digital indicators (141, 142, . . . ) to indicate the articles to be picked up in quantity, and the instruction for renewing the data to the data indication control circuit is applied by the reset push button switch corresponding to the completion of the designated articles to be picked up.

# F I G. 3

0102415

- 1 -

## Picking apparatus for distribution system

The present invention relates to a picking apparatus for a distribution system and, more particularly, to a picking apparatus which comprises a plurality of shelving units, each having a plurality of racks, each divided into a plurality of compartments, each compartment storing one type of article; and which picks up designated number of articles from the designated compartment of the shelving unit designated by an order in accordance with the order.

There exists a distribution system in which shelves are installed in specified zones in a warehouse in such a manner that storage compartments are respectively specified for types of articles to be picked up, and the specified number of articles is designated by an order. In this system, a picker picks up the specified number of articles designated by the order list, accumulates the articles per order unit and distributes the articles.

Normally, a stockpicker moves through an aisle which is divided by shelves into a plurality of compartments while observing picking documents he holds in his hand. He picks up the designated number of articles specified by an order list from the corresponding compartment of the rack which stores the articles. After the picker, however, reads the order list to identify the articles to be picked up with such working means, he searches the compartment which stores the articles. Thereafter, he must confirm that the articles of the compartment thus searched are those designated by the order list, and then pick up the articles of the number designated by the order list. Accordingly, it requires a considerable amount of time for each unit of work of picking up one article, and remarkably lowers working efficiency in a large-scale system. Further, there is a possibility of frequently causing errors such as a misreading of the order list, and errors in the type and the quantity of the articles are likely to occur.

It is considered, therefore, in a large-scale system of this type to provide indicators at the positions of the storage compartments for the respective articles in each shelving unit and to indicate the position of the compartment for the articles to be picked up by a computer system or to indicate the quantity of the articles to be picked up by the computer. In other words, the picker picks up the articles of the compartment designated by the indicator in the specified quantity and transmits the completion of the picking-up work with a reset push button switch to the computer system. The computer system detects the operation of the reset push button switch and indicates the articles to be picked up next on the indicator.

Therefore, it is necessary in such a system to provide a signal channel between the central computer system and each shelving unit, resulting in a huge number of wires. When parallel bit signals are, employed, for example, 4 bit wires are required for one digit of indicating numerals, and 4 times the number of digits of bit wires are required for one indicator. A number of bit wires are respectively laid for each compartment which stores different types of articles. In this manner, the number of wires from the central computer becomes large. Since one shelving unit is composed, for example, of relatively inexpensive shelf which is approx. 150 cm wide the increase in the cost of the wiring for indicating the orders causes the shelving to be impractical.

It is an object of the present invention to provide a picking apparatus for a distribution system which is capable of improving the efficiency of picking work with a simple structure and without an error.

It is another object of the present invention to provide a picking apparatus which allows a sufficient decrease in the signal channels for transmitting data between a central control system which dispatches an order command and a plurality of shelving units, each having a plurality of compartments.

It is still another object of the present invention to provide a picking apparatus which can perform the work of identifying the designated articles by a picker in front of a shelving unit without an error and picking up the designated articles of a specified quantity in an efficient sequence to thereby improve the efficiency of the picking work.

It is still another object of the invention to provide a picking apparatus for a distribution system which is capable of efficiently improving the picking work in an order unit.

According to a picking apparatus for a distribution system of the present invention, a set of common signal circuits may be formed for a plurality of shelving units, each having a plurality of compartments, thereby sufficiently decreasing the number of wires between the central control system and each shelving unit. In each shelving unit, the position of the compartment which stores the articles designated by an order is indicated and specified together with the quantity of the articles to be picked up, and a picker may accordingly, simply pick up the articles. Further, only one type of article to be picked up per shelving unit is always specified in the picking work. The picker pushes a reset push button when the picking work of the articles is completed, and articles to be picked up next are then indicated and specified. Therefore, the work sequence can be clearly designated without disorder, and the efficiency of the picking can be enhanced without errors.

Further objects and advantages of the present invention will become apparent from the following disclosure.

This invention can be more fully understood from the following detailed description when taken in conjunction with the accompanying drawings, in which:

Fig. 1 is a perspective view showing one of shelving units which constitute a picking apparatus according to a preferred embodiment of the present invention;

Fig. 2 is a plan explanatory view of the picking system constructed with a plurality of shelving units shown in Fig. 1; and

Fig. 3 is a block diagram describing the circuit for controlling the indicating system of the picking apparatus.

The present invention will now be described in more detail with reference to the accompanying drawings.

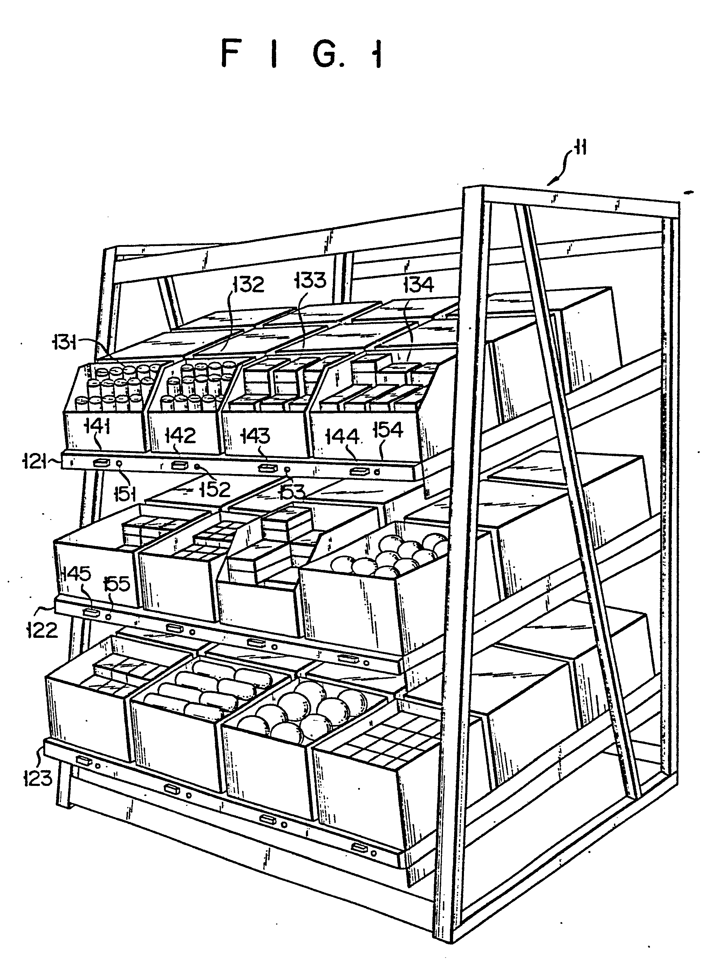

Fig. 1 shows a shelving unit 11 of a picking apparatus in a distribution system according to the present invention. This shelving unit 11 is associated with metallic frames. This shelving unit 11 has, for example, three racks 121, 122, 123 formed horizontally. Each of these racks 121 to 123 is laterally divided into four compartments. Bins 131, 132, 133, 134 respectively store articles and are placed on each rack corresponding to the four compartments. The bins 131, 132, ... store articles of the types designated in the respective compartments.

The respective racks 121 to 123 are obliquely constructed to lower the front edges thereof. A plurality of article storage bins are aligned toward the rear in each compartment on each rack to replenish the articles to be picked up by allowing the rear bin to be slided forward when the foremost bin becomes empty, and is then removed.

Numbers 141, 142, 143, 144, ... are provided on the front surfaces of the respective racks 121 to 123 corresponding to the positions of the respective compartments on each rack, and corresponding reset push button switches 151, 152, 153, 154, ... are provided to the respective indicators 141, 142, 143, 144, .... These switches 151, 152, ... may be replaced with push button switch 15 per shelving unit 11. The numbers 141, 142, ... indicate the quantities of the articles to be picked up in the corresponding compartments on each rack, and also function as item indicators for indicating the designation of the articles to be picked up. In this case, item indicators, though not particularly shown, may be provided correspondingly to the indicators 141, 142, .... When the indicators 141, 142, ... are, for example, composed of fluorescent light emitting indicators, the item indicators are not necessary.

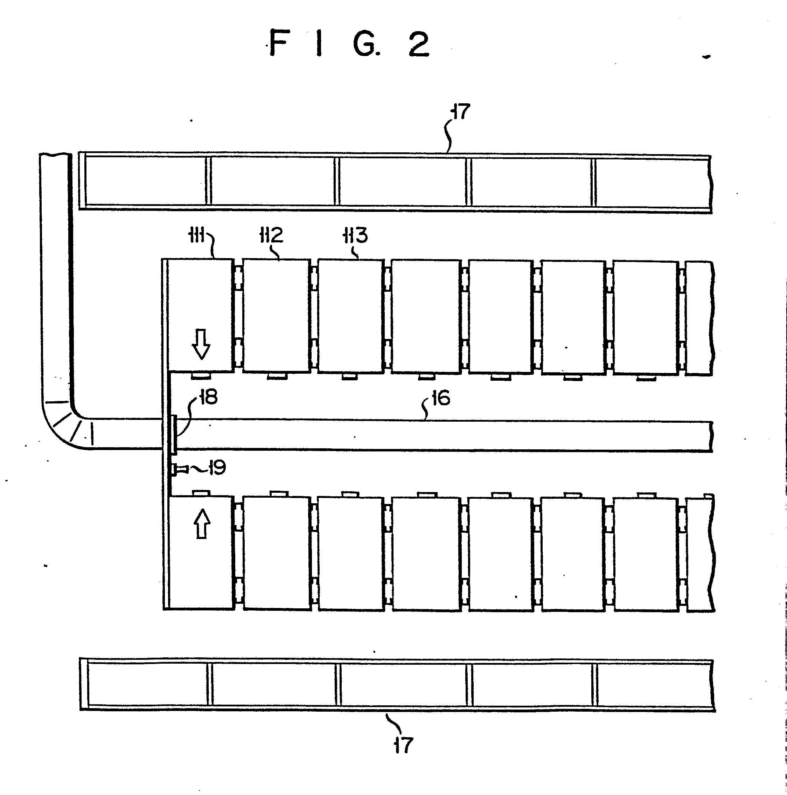

Fig. 2 shows an arrangement of the shelving units in a warehouse, for example. A number of shelving units 111, 112, ... are arranged at both sides of a belt conveyor line 16 which conveys the articles thus picked up, and the articles thus picked up from the respective shelving units 111, 112, ... are conveyed via the belt conveyor 16 to an article accumulation chamber (not shown). A plurality of pallet storage racks 17 which respectively store articles to be replenished to the respective shelving units 111, 112, ... or articles to be delivered in large quantity in a pallet unit are provided behind the integral shelving units 111, 112, ....
Further, an order number indicator 18 of a digital numeral indicator is provided at a position capable of being seen from a working aisle formed of a number of shelving units 111, 112, .... A warning buzzer 19 which rings when a new order number is indicated is attached to the indicator 18.

The picking work of the picking apparatus thus constructed is carried out in an order unit. In other words, an order number is indicated on the order number indicator 18 at the start of work for one order, the warning buzzer 19 is rung to notify a picker of the start of picking work by a new order. At this time, the articles to be picked up are indicated and designated by the indicators 141, 142, ... of the shelving units 111, 112, ... in accordance with the content of the order. In this case, a maximum of only one type of article is designated for one shelving unit, and the quantity of the articles to be picked up is indicated by the numerical value on the corresponding indicator. The picker picks up the articles of the compartment designated by the indicator in the quantity designated, places the articles on the conveyor belt 16, and then operates the reset push button switch attached to the indicator upon completion of the picking work. When the reset push button switch is operated, the indicator of the compartment corresponding to the ordered articles is, when the ordered articles are further contained in the shelving unit, driven and indicates the designated quantity of the articles. Such indication and picking work are performed for the respective shelving units, and the ordered articles are thus picked up completely.

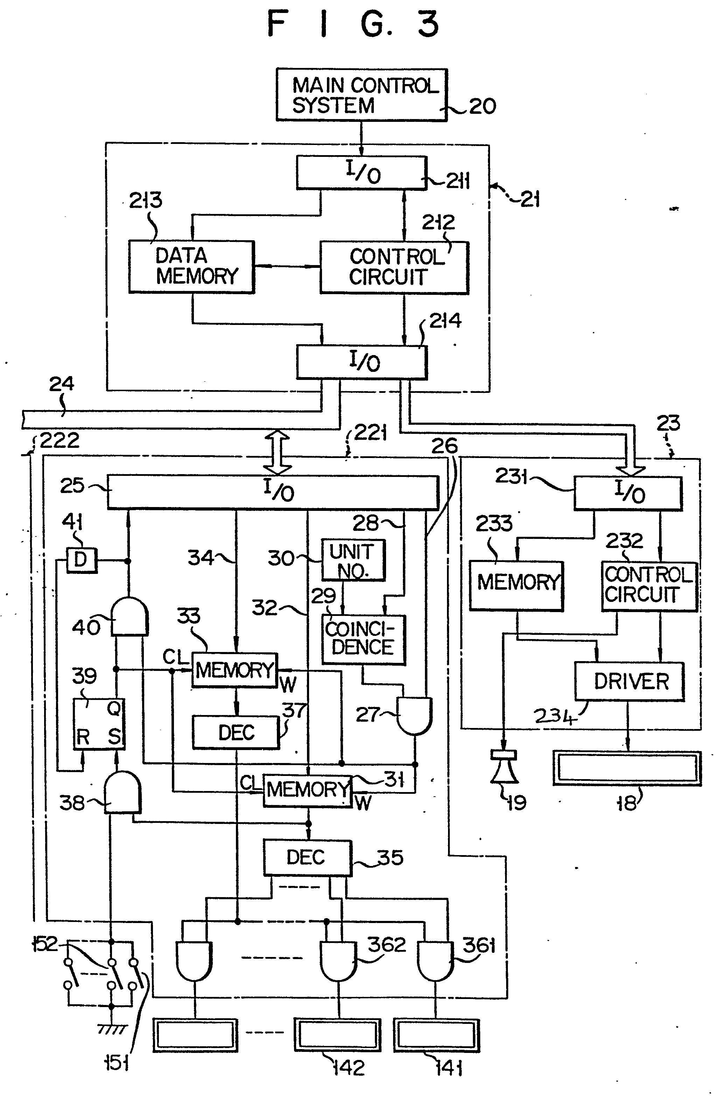

Fig. 3 shows a control circuit for controlling the indicating system for the picking work. This includes a main control system 20 composed of a computer system. Data are inputted, stored and set in the main control system 20 through a master computer by a keyboard or a floppy disk regarding articles to be picked up per order unit such as, a unit number for designating the shelving unit 111, 112, ... a location number for designating the compartment of the shelving unit, and quantity data.

The above described data groups for a plurality of orders are stored and set in the main control system 20 from which the data group of preceding order are supplied to a data indication controller 21. In other words, the unit number data, location number data and quantity data for designating the compartments which store all articles to be designated by one order are read from the main control system 20, and are then supplied to an I/O circuit 211 of the data indication controller 21. When the data are inputted to the I/O circuit 211, a control circuit 212 produces a wire instruction to a data memory 213, and the data groups are all written and stored in the data memory 213.

Indication control circuits 221, 222, ... are respectively provided for the shelving units 111, 112, ... and an order instruction indicator 23 in the main control system 20.

When a completion signal is fed from the main control system 20 when the data for all the articles for one order are completely stored in the data indication controller 21, the control circuit 212 reads the order number from the stored data of the memory 213, and delivers it through the I/O circuit 214 to the order instruction indicator 23.

The order instruction indicator 23 comprises an I/O circuit 231, a control circuit 232 and a memory 233, and stores and sets the order number in the memory 233 in accordance with the instruction of the control circuit 232. The stored order number is read by a driver 234 with the instruction from the control circuit 232, is digitally indicated on the order number indicator 18 shown also in Fig. 2, the warning buzzer 19 is rung, and new the order designated is notified to a picker. Subsequent to the order indicating operation, the article data stored in the data memory 213 are respectively transmitted to the indication control circuits 221, 222, ... corresponding to the shelving units 111, 112, ....

In this case, a bus line 24 is connected between the data indication control circuit 21 and the respective indication control circuits 221, 222, ... and the output data from the data indication control circuit 21 are supplied in parallel to the respective indication control circuits 221, 222, .... When the data signal employs series bits, one bit line 24 may be used, but parallel bit lines may also be used. It is effective when parallel bit lines are formed correspondingly to transmit simultaneously data such as the unit number, location number and quantity data to form a bus line 24. In any case, a set of bus lines 24 may be formed between the data indication control circuit 21 and a plurality of indication control circuits 221, 222 ....

Article data formed of unit number, location number and quantity data are stored and set for respective shelving units 111, 112, ... in the data memory 213 of the data indication control circuit 21. When the indication control circuits 221, 222, ... are read, the article data of respective different types of unit number are sequentially read, and are fed to the bus line 24. In this case, a strobe signal is fed prior to each article data.

The indication control circuits 221, 222, ... are composed of the same arrangement, and the indication control circuit 221 will now be described as a representative of these circuits.

The indication control circuit 221 comprises an I/O circuit 25 connected to the bus line 24. When the strobe signal is inputted to the I/O circuit 25, the signal rises at line 26 to apply a gate signal to an AND gate 27. When a unit number data is inputted to the I/O circuit 25 subsequently to the strobe signal, it is produced from a line 28, and is then applied to a coincidence detector 29. To the coincidence detector 29 is applied, as a comparison data, a number data from a unit number setting circuit 30 which stores and sets the number of the shelving unit corresponding to the indication control circuit 221. When the number data is coincident to the inputted unit number, the output signal of the coincidence detector 29 rises, and is applied to the AND gate 27. In other words, when the unit number data is applied from the data indication control circuit 21 to the indication control circuit 221, an output signal is produced from the AND gate 27, and is applied to send the write instruction to a memory 31. The location number data is applied to the memory 31 through a line 32 from the I/O circuit 25, and this data is written and stored in the memory 31 by the write instruction. The output signal from the AND gate 27 is also applied as a write instruction to a memory 33. To the memory 33 is applied the quantity data through a line 34 from the I/O circuit 25, and the data is stored in the memory 33 by the write instruction.

The signal of the line 26, though omitted in Fig. 3, is a signal which has a time duration continuing until the signal from the coincidence detector 29 rises, and the write instructions delivered from the AND gate 27 to the memories 31 and 33 have a time duration until the location number data and the quantity data are produced from the I/O circuit 25.

When the article data with the strobe signal are applied from the data indication control circuit 21 to the bus line 24, an output signal is produced from the AND gate 27 of the indication control circuit 221 corresponding, for example, to the unit number data. The location number data is stored in the memory 31 and the quantity data is stored in the memory 33. In other words, the output article data from the data indication control circuit 21 are distributed to the indication control circuits 221, 222, ... of the shelving units which store the articles, and are stored and held.

The location number data stored and set in the memory 31 are supplied to a decoder 35, which in turn supplies the gate signal to the AND gates 361, 362, ... provided correspondingly to the indicators 141, 142, .... The quantity data stored in the memory 33 are supplied through the decoder 37 to the AND gates 361, 362, ... and the indicators 141, 142, ... are driven and indicated by the numerical value indication drive signals obtained from the AND gates 361, 362, .... In other words, the indicators of the compartment corresponding to the article data digitally indicate the quantity of the articles to be picked up.

Reset push button switches 151, 152, ... attached respectively to the indicators 141, 142, ... are connected in parallel, and one of the switches 151, 152, ... is closed when the articles designated by the indicator are picked up in the designated quantity. The signal from the parallel circuit of the reset switches 151, 152, ... is applied to an AND gate 38. To the AND gate 38 is applied a gate signal when the data is stored in the memory 31, and when one of the switches 151, 152, ... is closed, an output signal from an AND gate 38 is generated and is applied to a flip-flop 39 to set to it. When this flip-flop 39 is set, it produces a clear signal to the memories 31 and 33 to clear the stored data in the memories 31 and 33, and applies a gate signal to the AND gate 40. To the AND gate 40 is connected an output signal from the AND gate 27.

From the indication controller 21 are periodically and repeatedly produced, article data with the strobe signal to be distributed to the indication control circuits 221, 222, .... An output signal is produced from the AND gate 27 at the time for delivering the data corresponding to the indication control circuit 221, and designated article picking work completion signal is produced from AND gate 40. This completion signal is delivered through the bus line 24 from the I/O circuit 25 to apply an instruction to the control circuit 212 of the data indication controller 21, thereby allowing the reading of the next article data to the indication control circuit 221 from the data memory 213. Then, the output signal from the AND gate 40 applies a reset instruction to the flip-flop 39 through a delay circuit 41, thereby providing a standy state for the waiting input of next article data.

Claims:

1. A picking apparatus for a distribution system for picking up articles designated by an order list in designated quantity and having a plurality of shelving units, each having a plurality of compartments for storing the articles and a plurality of digital indicators provided at the respective compartments, said picking apparatus characterized in that an indication controller for indicating and driving said digital indicator is provided at each shelving unit, said indication controller is connected through a common bus line to a data indication control circuit for storing and setting the article data formed of unit numbers, location numbers and quantity data, and the article data fed through the bus line by said indication controller are identified selectively by the unit number.

2. The picking apparatus according to claim 1, wherein said indication controller comprises a unit number setting circuit for storing the unit number thereof, and means for detecting the coincidence of a predetermined unit number set by said setting circuit to the unit number data of the article data transmitted from said bus line, whereby the location number and quantity data of the article data to be transmitted through said bus line are stored by the coincidence detection signal from said detecting means.

3. The picking apparatus according to claim 1, wherein each of said shelving units comprises a plurality of racks, each having a plurality of compartments, and a plurality of indicators provided at the respective compartments.

4. The picking apparatus according to claim 1, wherein a resetting push button switch for indicating the completion of picking up the designated articles in designated quantity is provided in each shelving unit.

5. The picking apparatus according to claim 4, wherein said push button switch is associated with a digital indicator provided corresponding to the compartment.

6.   The picking apparatus according to claim 1, wherein said data indication controller comprises a data memory for storing the article data in every shelving unit by unitizing, and a control circuit for periodically and repeatedly reading selectively the article data stored in said data memory at every shelving unit and delivering it to said bus line.

7.   The picking apparatus according to claims 4 and 6, wherein said reset push button switch produces an operation signal to the control circuit of said data indication controller, and the control circuit thus reads the next article data for the same shelving unit from said data memory.

8.   The picking apparatus according to claim 1, wherein a plurality of shelving units are arranged, and an order number indicator is provided at a position capable of being observed from the aisle in front of said shelving units.

9.   The picking apparatus according to claim 8, wherein said order number indicator digitally indicates the order number by the instruction from said data indication controller prior to the picking work for a new order.

10.   The picking apparatus according to claim 8, wherein said order number indicator is associated with a warning buzzer for indicating the start of a new order.

# F I G. 1

# FIG. 2

F I G. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y,A | Patent Abstracts of Japan vol. 5, no. 162, 17 October 1981 & JP-A-56-88008<br><br>--- | 1,3,4 | B 65 G 47/10 |
| Y,A | ELECTRONIC DESIGN, vol. 29, no. 14, July 1981, Denville D. FOLKES "Remote-control processors boost efficient data comm", pages 117-121<br>* Page 117, lines 1-31 ; page 118, line 47 - page 119, line 4, figure 1 *<br><br>--- | 1,2 | |
| Y,A | US-A-3 908 800 (DRAPEAU)<br>* Abstract ; figures 1-3 *<br><br>--- | 1,3,5 | |
| Y | FR-A-2 484 671 (SA A LA TRICOTEUSE et al.)<br>* Page 2, lines 2-19 *<br><br>--- | 1 | TECHNICAL FIELDS SEARCHED (Int. Cl. ³) |
| Y | GB-A-1 462 052 (THE PLESSEY CO., LTD.)<br>* Page 1, lines 8-55 *<br><br>--- | 1 | B 65 G 1/00<br>B 65 G 47/10<br>G 06 F 15/00<br>G 08 C 15/00 |
| A | US-A-3 741 345 (SARIDIS)<br><br>--- | | |
| A | GB-A-1 297 918 (THE M.E.L. EQUIPMENT CO., LTD.)<br><br>----- | | |

The present search report has been drawn up for all claims

| Place of search<br>BERLIN | Date of completion of the search<br>16-03-1983 | Examiner<br>SIMON J J P |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82